# EUROPÄISCHE PATENTANMELDUNG

(11) **EP 2 857 082 A1**
(43) Veröffentlichungstag der Anmeldung: **08.04.2015**
(21) Anmeldenummer: 13187103.0
(22) Anmeldetag: 02.10.2013
(51) Int. Cl.: B01D 46/00, B01D 46/44

(54) **Filteranlage mit einer selbstregelnden Abreinigung**

(71) Anmelder: Paul Wurth Umwelttechnik GmbH, 45131 Essen (DE)
(72) Erfinder: Weißert, Thilo, 44879 Bochum (DE)
(74) Vertreter: Office Freylinger

(57) **Zusammenfassung**

Erfindungsgemäß weist die Filteranlage eine Gasspeisung (Druckluftspeisung) auf, welche die Filteranlage mit einem Abreinigungsmedium mit einem Speisedruck pN versorgt. Die Filteranlage weist auch einen Abreinigungstank auf, der von der Gasspeisung gespeist wird und in dem das Abreinigungsmedium mit einem Abreinigungsdruck pT gespeichert ist. Des Weiteren weist die Filteranlage auch einen Druckfilter mit einem Filterdruck pF auf. Der Druckfilter wird zyklisch in vorbestimmten Zeitabständen oder differenzdruckabhängig von dem Abreinigungsmedium aus dem Abreinigungstank gereinigt.

## Beschreibung

### Technisches Gebiet

Die vorliegende Erfindung betrifft allgemein eine Filteranlage mit einer selbstregelnden Abreinigung. Die Erfindung ist besonders zur Reinigung einer Filteranlage geeignet, welche zur Reinigung von Sendegefäßen im Bereich der Kohlenstaubeinblasung eingesetzt wird. In den Sendegefäßen wird Kohlestaub mit Stickstoff auf einen vorbestimmten Druck komprimiert. Ist der vorbestimmte Druck erreicht, so wird der Kohlestaub mit dem Stickstoff pneumatisch aus dem Sendegefäß befördert bis im Sendegefäß nicht mehr ausreichend Kohlestaub vorhanden ist. Zum Nachladen des Sendegefäßes wird der Druck des Sendegefäßes an den Umgebungsdruck angepasst. Beim Entspannen darf der restliche Kohlestaub im Sendegefäß jedoch nicht in die Atmosphäre gelangen. Deshalb wird die beim Entspannen abgelassene Luft in eine Filteranlage umgeleitet in der mehrere Filterschläuche angeordnet sind. Die verstaubten Filterschläuche können mit einer erfindungsgemäßen Abreinigung während der Entspannung gereinigt werden.

### Stand der Technik

Aus dem Stand der Technik gehen unterschiedliche Abreinigungssysteme für Filteranlagen hervor, welche eine Reinigung von verschmutzten Filtern ermöglichen. Filteranlagen werden in zahlreichen industriellen Prozessen angewandt und dienen grundsätzlich zum Reinigen/Entstauben eines Fluidstroms, welcher durch solche Filteranlagen geleitet wird. Im Inneren weisen die Filteranlagen meistens mehrere Filterschläuche auf, welche das durchströmende Fluid von Verunreinigungen, wie beispielsweise Staubpartikel, befreien. In den meisten Fällen wird der Fluidstrom von außen nach innen durch die Filterschläuche geleitet, so dass sich die Verunreinigungen an der Außenseite der Filterschläuche absetzen. Nach einer gewissen Betriebszeit sind die Filterschläuche verschmutzt und müssen gereinigt werden.

Anfangs wurden die Filter durch Rütteln oder Klopfen durch motorisch oder manuell bediente Rüttelvorrichtungen abgereinigt. Mit Hilfe solcher Verfahren werden die Filterschläuche in Schwingung versetzt und der Filterkuchen löst sich aufgrund dieser Bewegungen von der Außenfläche der Filter. Die mechanische Abreinigung hat jedoch eine hohe Beanspruchung der Filterschläuche zur Folge, weshalb sich deren Standzeit verkürzt.

Um die Beanspruchung der Filterschläuche zu reduzieren, ist man auf eine Abreinigung der Filterschläuche mit einem Luftstrom übergegangen, welcher gegenüber dem Filterdruck mit einem Überdruck bereitgestellt wird. Besonders Abreinigungsströme, welche gepulst auf die Filterschläuche aufgebracht werden, eignen sich besonders um die Filterschläuche effizient zu reinigen. Deshalb werden Filterschläuche heutzutage vorwiegend mit dem "Pulse-Jet"-Verfahren abgereinigt. Bei solch einem Verfahren wird das Abreinigungsmedium von innen nach außen (in Gegenstromrichtung zum Fluidstrom) durch die Filterschläuche geleitet, wodurch der Filterkuchen von der Außenfläche der Filterschläuche gelöst und in einem Staubsammelbehälter aufgefangen wird. Die ersten "Pulse-Jet"-Verfahren beaufschlagten die Schlauchfilter mit einem gepulstenen Abreinigungsstrom mit einem konstanten Abreinigungsdruck. Es hat sich jedoch gezeigt, dass keine "effektive" Abreinigung der Filterschläuche möglich ist, falls der Abreinigungsdruck nicht an den Filterdruck angepasst wird.

Zum Durchführen der Abreinigung wird sichergestellt, dass der Impuls, welcher von der Abreinigungsluft auf die Schlauchfilter aufgebracht wird die Schlauchfilter nicht zu stark beansprucht. Entscheidend dabei ist der Überdruck mit dem das Abreinigungsmedium bereitgestellt wird. Wird der Überdruck des Abreinigungsdruck gegenüber dem Filterdruck zu hoch gewählt, so wird die Standzeit der Schlauchfilter reduziert. Im schlimmsten Fall kann sogar der Schlauchfilter durch einen zu hohen Überdruck zerstört werden. Für den Fall, dass der Überdruck jedoch nicht ausreichend hoch gewählt wurde, wird der Schlauchfilter nicht effizient abgereinigt. Demzufolge wird der Abreinigungsdruck so reguliert, dass er gegenüber dem Filterdruck in einem vorbestimmten Bereich liegt, sodass der Abreinigungsdruck ausreicht um den Schlauchfilter effektiv und schonend zu reinigen.

Das Patent US 5 837 017 beschreibt eine Abreinigungseinrichtung, welche den Differenzdruck zwischen der "sauberen Seite" des Schlauchfilters und der "schmutzigen Seite" des Schlauchfilters mit Drucksensoren erfasst. Die Abreinigungseinrichtung in US 5 837 017 basiert auf der Annahme, dass die Verschmutzung der Schlauchfilter von der Größe der gemessenen Druckdifferenz zwischen der "sauberen Seite" und "schmutzigen Seite" abhängig ist. Hat die Größe der gemessenen Druckdifferenz einen bestimmten Schwellwert erreicht, erkennt die Kontrolleinheit, dass der Filter verstopft ist und öffnet ein Druckventil, welches die Abreinigungsdüsen mit Abreinigungsluft versorgt. Das Druckventil wird so von der Kontrolleinheit gesteuert, dass der Abreinigungsdruck an die Druckdifferenz im Filter angepasst wird. Dementsprechend wird der Abreinigungsdruck an den Grad der Verschmutzung angepasst. Bei der beschriebenen Anlage wird sowohl der Druck auf der "sauberen Seite" als auf der "schmutzigen Seite" mit Hilfe von Drucksensoren gemessen und an eine Kontrolleinheit weitergegeben werden.

Die Drucksensoren auf der "schmutzigen Seite" des Schlauchfilters sind jedoch ständig Verunreinigungen ausgesetzt, weshalb eine zuverlässige Erfassung des Differenzdrucks problematisch ist. Da es sich bei der Filterabreinigung um einen hoch automatisierten Prozess handelt, kann das Fehlverhalten von einem der beiden Drucksensoren nur schwer von "außen" festgestellt werden. Somit wird ein Fehlverhalten, wenn überhaupt, erst bemerkt, wenn es schon zu spät ist, d.h. wenn die Filterschläuche entweder frühzeitig gerissen sind, oder wenn die Filterschläuche so verstopft sind, dass es in der Filteranlage zu einem erhöhten Druckverlust kommt.

Des Weiteren, steuert die Anlage die Abreinigung über die Differenzdrücke und nicht über die Absolutdrücke. Steigt der Filterdruck beispielsweise durch externe Einflüsse an, kann der Schlauchfilter nicht mehr gereinigt werden, da der benötigte Abreinigungsdruck nicht mehr bereitgestellt werden kann.

### Aufgabe der Erfindung

Eine Aufgabe der vorliegenden Erfindung ist es, eine Filteranlage bereitzustellen, welche eine zuverlässige Bereitstellung eines Abreinigungsdrucks pT zur Abreinigung der Filterschläuche bei einem variablem Filterdruck ermöglicht. Diese Aufgabe wird durch eine Abreinigungsanlage nach Anspruch 1 gelöst.

### Allgemeine Beschreibung der Erfindung

Erfindungsgemäß umfasst die Filteranlage eine Gasspeisung, wobei es sich bei einer bevorzugten Ausgestaltung der Erfindung um eine Druckluftspeisung handelt, welche die Filteranlage mit einem Abreinigungsmedium mit einem konstanten Speisedruck pN versorgt. Des Weiteren umfasst die Filteranlage einen Abreinigungstank, der von der Gasspeisung gespeist wird und in dem das Abreinigungsmedium mit einem variablen Abreinigungsdruck pT gespeichert ist wobei pN ≥ pT ist. Die Filteranlage umfasst auch einen Druckfilter mit einem Filterdruck pF. Der Druckfilter wird zyklisch in vorbestimmten Zeitabständen oder differenzdruckabhängig von dem Abreinigungsmedium aus dem Abreinigungstank abgereinigt. Zusätzlich weist die Filteranlage einen Regelkreis auf, welcher einen ersten Differenzdruckregler und eine erste Regeleinheit umfasst. Der erste Differenzdruckregler ist zwischen der Gasspeisung und dem Abreinigungstank angeordnet. Die erste Regeleinheit betätigt den ersten Differenzdruckregler bei einer unteren Druckdifferenz. Des Weiteren umfasst der Regelkreis einen zweiten Differenzdruckregler und eine zweite Regeleinheit. Der zweite Differenzdruckregler ist in der Ablassleitung des Abreinigungstanks angeordnet. Die Ablassleitung ist bevorzugt zwischen dem Abreinigungstank und dem Druckfilter angeordnet. Die zweite Regeleinheit betätigt den zweiten Differenzdruckregler bei einer oberen Druckdifferenz. Die Regeleinheit umfasst auch eine positive Wirkleitung und eine negative Wirkleitung. Die positive Wirkleitung fluidverbindet die erste Regeleinheit mit der zweiten Regeleinheit und dem Abreinigungstank. Die negative Wirkleitung fluidverbindet die erste Regeleinheit mit der zweiten Regeleinheit und dem Druckfilter. Im Betrieb wird der Abreinigungsdrucks pT mit einem Überdruck gegenüber dem Filterdruck pN im Abreinigungstank bereitgestellt wird und an der erste Regeleinheit und der zweiten Regeleinheit anliegt. Die erste Regeleinheit betätigt den ersten Differenzdruckregler wenn der Überdruck unter der unteren Druckdifferenz liegt. Die zweite Regeleinheit betätigt den zweiten Differenzdruckregler, wenn der Überdruck über der oberen Druckdifferenz liegt.

Infolgedessen ist sichergestellt, dass der Druckfilter beim Abreinigen mit einem Abreinigungsdruck pT beaufschlagt wird, der ein effektives und schonendes Reinigen der Filteranlage ermöglicht ohne dass der Druck gemessen wird. Im Betrieb stellt die Filteranlage den geeigneten Abreinigungsdruck zu jeder Zeit bereit, ohne dass sich auch nur ein Sensor im Druckfilter befindet. Auch bei einer Variation des Filterdrucks pF regelt die Filteranlage zuverlässig nach und passt den Abreinigungsdruck pT so an, dass eine zuverlässige Filterreinigung gewährleistet ist.

Bei der Abreinigungsvorrichtung im Patent US 5 837 017 ist eine solche Anpassung nicht möglich. Da die Sensoren auf der "schmutzigen Seite" des Filters aufgrund des Staubes verschmutzen würden. Demnach bietet das Patent US 5837 017 keine Lösung zum Reinigen von verschmutzen Filtern, vor allem nicht dann, wenn die Filter unter fluktuierendem Filterdruck gereinigt werden. Auch für den Fall, dass das System (wenn auch nicht zuverlässig) kurzzeitig funktionieren würde, ist nicht bekannt inwiefern die Abreinigung durch Veränderungen des Filterdrucks verändert wird. Das Patent beschreibt nur eine Veränderung des Abreinigungsstroms infolge der Stärke der Verschmutzung der Filter, wobei die Veränderung von einem Regelventil durchgeführt wird Steigt der Filterdruck beispielsweise durch externe Einflüsse an, wie es beispielsweise beim Entspannen der Sendegefäße der Fall ist, ist nicht gewusst wie die Abreinigungsvorrichtung in US 5 837 017 auf diese Einflüsse reagiert, da das System nicht für solche Druckschwankungen ausgelegt ist..

Die erfindungsgemäße Filteranlage ist durch die Fluidverbindung zwischen den Regeleinheiten besonders zuverlässig und von äußeren Einflüssen unabhängig. Gerade in diesem Einsatzbereich, wo viele Verunreinigungen geradezu "gesammelt" werden Falschmessungen, Störungen und Versagen von Sensoren geradezu provoziert. Da bei der erfindungsgemäßen Filteranlage keine Sensoren benötigt werden, um ein Selbstregeln des Abreinigungsdrucks gegenüber dem Filterdruck zu gewährleisten, ist die erfindungsgemäße Filteranlage besonders zuverlässig.

Die erfindungsgemäße Filteranlage stellt sicher, dass bei fluktuierendem Betriebsdruck pF (Filterdruck) stets ein vorbestimmter Überdruck zwischen dem Druckfilter und dem Abreinigungstank gewährleistet ist. Beim Abfallen oder Ansteigen des Filterdrucks pF wird der Abreinigungsdruck im Abreinigungstank von der Regeleinheit nachgeregelt, sodass die Druckdifferenz zwischen dem Abreinigungstank und dem Druckfilter in dem vorbestimmten Druckbereich liegt.

Nach einer bevorzugten Ausgestaltung der Erfindung umfasst die erste Regeleinheit eine erste Feder mit der die untere Druckdifferenz eingestellt werden kann. Vorzugsweise ist in der ersten Regeleinheit eine erste Membran angeordnet, welche eine erste positive Druckkammer von einer ersten negativen Druckkammer trennt. Die erste Feder kann durch eine erste Vorspanneinrichtung so eingestellt werden, dass die erste Feder einen ersten Federdruck auf die erste Membran ausübt. Des Weiteren kann die zweite Regeleinheit eine zweite Feder umfassen mit der die obere Druckdifferenz eingestellt werden kann. Bevorzugt ist in der zweiten Regeleinheit eine zweite Membran angeordnet, welche eine zweite positive Druckkammer von einer zweiten negativen Druckkammer trennt. Die zweite Feder kann durch eine zweite Vorspanneinrichtung so eingesellt werden, dass die zweite Feder einen zweiten Federdruck auf die zweite Membran ausübt. Die erste Vorspanneinrichtung und die zweite Vorspanneinrichtung können manuell eingestellt oder elektronisch gesteuert werden. Die erste Feder und die zweite Feder ermöglichen eine Anpassung der ersten und der zweiten Druckdifferenz. Somit kann der Bereich des Überdrucks mit dem der Abreinigungsdruck gegenüber dem Druckfilter bereitgestellt werden soll eingestellt werden.

Bevorzugt ist der erste Differenzdruckregler mit der ersten Regeleinheit mechanisch gekoppelt und/oder der zweite Differenzdruckregler ist mit der zweiten Regeleinheit mechanisch gekoppelt. Dies ermöglicht eine besonders zuverlässige Steuerung der ersten Druckdifferenz und der zweiten Druckdifferenz. Sogar bei Stromausfall können die Differenzdruckregler die erste Druckdifferenz und/oder die zweite Druckdifferenz steuern.

Alternativ kann der erste Differenzdruckregler mit der ersten Regeleinheit elektronisch gekoppelt sein und/oder der zweite Differenzdruckregler kann mit der zweiten Regeleinheit elektronisch gekoppelt sein. Daraus ergibt sich der Vorteil, dass die Regeleinheiten nicht in unmittelbarer Nähe zu den Differenzdruckreglern angeordnet sein müssen.

Bevorzugt ist der erste Differenzdruckregler im Ruhezustand geöffnet und der zweite Differenzdruckregler im Ruhezustand geschlossen. Somit ist ein Füllen des Abreinigungstanks mit Abreinigungsluft aus dem Ruhezustand möglich.

Nach einer bevorzugten Ausgestaltung der Erfindung umfasst der Regelkreis mindestens einen Durchflussmengenbegrenzer, welcher in der negativen und/oder positiven Wirkleitung angebracht sind. Durch die Durflussmengenbegrenzer in den Wirkleitungen können Überschwinger der Differenzdruckregler vermieden werden.

Die Filteranlage wird bevorzugt bei Kohlestaubeinblasanlagen zum Reinigen der Filter von Sendegefäßen verwendet. Sowohl beim Entspannen als auch beim Verdichten des Sendegefäßes sollen die Filter gereinigt werden können. Hierzu wird die erfindungsgemäße Filteranlage verwendet.

### Kurze Beschreibung der Figuren

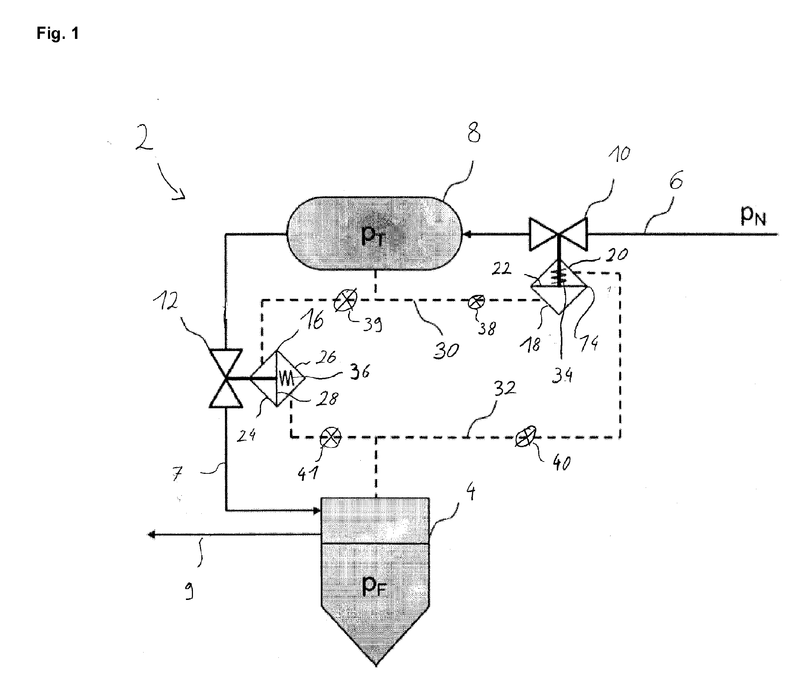

Weitere Einzelheiten und Vorteile der Erfindung können der nachfolgenden ausführlichen Beschreibung einer möglichen Ausführungsform der Erfindung anhand der beiliegenden Figur entnommen werden. Diese zeigt: Fig. 1 eine schematische Darstellung einer bevorzugten Filteranordnung.

### Beschreibung einer bevorzugten Ausgestaltung der Erfindung

In Abbildung 1 ist der Aufbau einer Filteranlage 2 dargestellt, welcher unter fluktuierendem Betriebsdruck arbeitet. Die Filteranlage 2 wird als Aufsatzfilter des Sendegefäßes für Kohle eingesetzt, wodurch sich der Filterdruck pF im Betrieb ändert. Die Filter sollen sowohl beim Entspannen des Druckes im Sendegefäß aus auch beim Verdichten des Druckes im Sendegefäß gereinigt werden können. Demzufolge wird wird der Abreinigungsdruck pT mit dem Filterdruck pF mitgeführt. Die Filteranlage 2 ist mit Filterschläuchen und einem Pulse-Jet Abreinigungssystem ausgestattet, welches die Filterschläuche entweder differenzdruckabhängig oder auch zyklisch abreinigt. Damit ein Filterkuchen von den Filterschläuchen gelöst werden kann, wird zum Abreinigen der Filter ein Abreinigungsdruck pT bereitgestellt, welcher über dem Betriebsdruck pF (welcher auch als Filterdruck pF bezeichnet wird) des Druckfilters 4 liegt. Ist der Abreinigungsdruck pT der Filteranlage 2 gegenüber dem Filterdruck pF zu gering, kann der Filterkuchen nicht oder nicht vollständig von den Schlauchfiltern gelöst werden. Für die Abreinigung wird das Abreinigungsmedium deshalb mit einem Überdruck gegenüber dem Filterdruck pF bereitgestellt. Ist der Überdruck der Filteranlage 2 zu hoch, kann dies im Extremfall ein Zerstören der Filterschläuche zur Folge haben. Im Regelfall wird durch einen zu hohen Überdruck die Standzeit der Filterschläuche verkürzt. Infolgedessen wird sichergestellt werden, dass der Überdruck des Abreinigungsdrucks pT gegenüber dem Filterdruck pF in einem bestimmten Druckbereich liegt.

Die Filteranlage in Fig.1 hat einen Druckfilter 4 zum Filtern der Verschmutzungen. Die zu filternde Luft wird von außen nach innen durch die Filterschläuche geleitet um gereinigt zu werden. Als Abreinigungsmedium zur Reinigung der Schlauchfilter kann sowohl Luft, Stickstoff als auch ein anderes inertes Gas verwendet werden. Bei dieser besonders bevorzugten Ausgestaltung der Erfindung wird zum Reinigen der Filter Druckluft verwendet. Die Druckluft wird mit einem Speisedruck pN an der Druckluftspeisung 6 bereitgestellt. Der Speisedruck pN wird so gewählt, dass er den Abreinigungsdruck pT des Abreinigungsmediums im Abreinigungstank 8 überschreitet. Die Druckluftversorgung verfügt über einen ersten Differenzdruckregler 10, der zwischen dem Abreinigungstank 8 und der Druckluftspeisung 6 angeordnet ist und einen Fluidstrom zwischen der Druckluftspeisung 6 und dem Abreinigungstank 8 regelt. Des Weiteren verfügt die Ablassleitung 7 von Abreinigungstank 8 zu Druckfilter 4 über einen zweiten Differenzdruckregler 12, der bei Überschreitung einer oberen Druckdifferenz zwischen Abreinigungstank 8 und Druckfilter 4 Druckluft aus dem Abreinigungstank 8 über den Druckfilter 4, bzw. die Druckfilterleitung 9 ablässt. Die Druckfilterleitung 9 führt nur sauberes Gas, das sie auf der sauberen Seite des Druckfilters angebracht ist.

Der erste Differenzdruckregler 10 weist eine erste Regeleinheit 14 auf, welche das Öffnen und Schließen des ersten Differenzdruckreglers 10 steuert. Ein Öffnen des ersten Differenzdruckreglers 10 füllt den Abreinigungstank 8 mit dem Abreinigungsmedium, was zu einer Erhöhung des Abreinigungsdrucks pT im Abreinigungstank 8 führt. Ein Schließen des ersten Differenzdruckreglers 10 führt dazu, dass keine Fluidverbindung zwischen dem Abreinigungstank 8 und der Druckluftspeisung 6 besteht. Im Ruhezustand ist der erste Differenzdruckregler 10 geöffnet um zu gewährleisten, dass der Abreinigungstank 8 mit Luft versorgt wird und in den Regeleinheiten 14, 16 ein erster Luftdruck zur Verfügung gestellt wird. Der zweite Differenzdruckregler 12 wird geschlossen um ein Befüllen des Abreinigungstanks 8 aus dem Ruhezustand heraus zu ermöglichen.

Der zweite Differenzdruckregler 12 weist eine zweite Regeleinheit 16 auf, welche das Öffnen und Schließen des zweiten Differenzdruckreglers 12 steuert. Ein Öffnen des zweiten Differenzdruckreglers 12 führt Luft aus dem Abreinigungstank 8 bevorzugt durch die Ablassleitung 7 in den Druckfilter 4 ab und erniedrigt somit den Abreinigungsdruck im Abreinigungstank 8. Der zweite Differenzdruckregler 12 ist bevorzugt so ausgelegt, dass er im Ruhezustand geschlossen ist. Daraus ergibt sich der Vorteil, dass bei einem Ausfall der Druckfilter 4 nicht mit einem zu hohen Abreinigungsdruck beaufschlagt wird.

Die beiden Regeleinheiten 14, 16 weisen jeweils eine erste Druckkammer 18, 20 und eine zweite Druckkammer 24, 26 auf, welche die Differenzdruckregler 10, 12 steuern. Abhängig von der anliegenden Druckdifferenz und den Federn 34, 36 werden die Differenzdruckregler 10, 12 entweder geschlossen oder geöffnet. Die Differenzdruckregler 10, 12 sind so eingestellt, dass sie nur zwei Zustände annehmen können. Die erste Regeleinheit 14 weist eine erste positive Druckkammer 18 und eine erste negative Druckkammer 20 auf, welche über eine erste flexible Membran 22 miteinander verbunden sind. Die zweite Regeleinheit 16 weist eine zweite positive Druckkammer 24 und eine zweite negative Druckkammer 26 auf, welche über eine zweite flexible Membran 28 miteinander verbunden sind. Die erste positive Druckkammer 18 ist mit der zweiten positiven Druckkammer 24 und dem Abreinigungstank 8 über die positive Wirkleitung 30 fluidverbunden. Im Abreinigungstank 8, in der ersten positiven Druckkammer 18 und der zweiten positiven Druckkammer 24 liegt somit der gleiche Druck an. Demzufolge entspricht der Druck in der positiven Wirkleitung 30 dem Abreinigungsdruck.

Die erste negative Druckkammer 20 ist mit der zweiten negativen Druckkammer 26 und dem Druckfilter 4 über eine negative Wirkleitung 32 fluidverbunden. In der ersten negativen Druckkammer 20, in der zweiten negativen Druckkammer 26 und in dem Druckfilter 4 liegt somit der gleiche Druck an. Demzufolge entspricht der Druck in der negativen Wirkleitung 32 dem Filterdruck.

Die positiven und die negativen Wirkleitungen 30, 32 sind so ausgelegt, dass ein Fluid in den Wirkleitungen geführt wird. Das Fluid in den Wirkleitungen 30, 32 entspricht dem Fluid im Abreinigungstank 8 und dem Druckfilter 4. Die positive Wirkleitung 30 besitzt eine Öffnung im Abreinigungstank 8 über die der Druckausgleich zwischen der positiven Wirkleitung 30 und dem Abreinigungstank 8 geregelt wird. Die negative Wirkleitung 32 besitzt eine Öffnung im Druckfilter 4, über die der Druckausgleich zwischen der negativen Wirkleitung und dem Abreinigungstank geregelt wird. Da die Wirkleitungen 30, 32 fluidverbunden sind und nur für den Druckausgleich zwischen Abreinigungstank, erster Regeleinheit 14 (Druckkammer 18) und zweiter Regeleinheit 16 (Druckkammer 24) bzw. Druckfilter 4 mit erster Regeleinheit 14 (Druckkammer 20) und zweiter Regeleinheit 16 (Druckkammer 26) sorgen muss, können diese Wirkleitungen 30, 32 mit einem relativ kleinen Querschnitt gewählt werden. Vorzugsweise wird für die Wirkleitungen 30, 32 ein Querschnitt von 1/8 Zoll (9,73 mm) verwendet. Der Regelkreis, welcher den Abreinigungsdruck pT steuert, umfasst die positiven und negativen Wirkleitungen 30, 32, die erste Regeleinheit 14 und die zweite Regeleinheit 16, sowie den ersten und zweiten Differenzdruckregler 10, 12. Um die Einstellbarkeit der ersten Regeleinheit 14 und der zweiten Regeleinheit 16 zu verbessern, ist eine erste Feder 34 in der ersten negativen Druckkammer 20 und eine zweite Feder 36 in der zweiten negativen Druckkammer 26 angeordnet. Beide Federn 34, 36 dienen zum Einstellen des Schwellenwerts, bei dem die Differenzdruckregler 10, 12 öffnen oder schließen und können so eingestellt werden, dass der Überdruck des Abreinigungsdruck gegenüber dem Filterdruck festgelegt werden kann. Die erste Feder 34 wirkt je nach Einstellung der ersten Vorspanneinrichtung einen ersten Federdruck auf die erste Membran aus. Die zweite Feder 36 wirkt je nach Einstellung der zweiten Vorspanneinrichtung einen zweiten Federdruck auf die zweite Membran aus. Der erste Differenzdruckregler 10 schaltet in Abhängigkeit der Druckdifferenz zwischen der ersten positiven Druckkammer 18, der ersten negativen Druckkammer 20 und dem auf die erste Membran 22 aufgebrachten ersten Federdruck. Der zweite Differenzdruckregler 12 schaltet in Abhängigkeit der Druckdifferenz zwischen der zweiten positiven Druckkammer 24, der zweiten negativen Druckkammer 26 und dem auf die zweite Membran 28 aufgebrachten Federdruck.

Der Regelkreis ist so eingestellt, dass der Abreinigungsdruck pT zu jeder Zeit um mit einem vorbestimmten Überdruck gegenüber dem Filterdruck pF, um den Druckfilter 4 mit der Abreinigungsluft effektiv reinigen zu können. Der Betrag wird durch Festlegen einer unteren Druckdifferenz und einer oberen Druckdifferenz bestimmt. Die untere Druckdifferenz ist der Betrag des geringsten Überdrucks, den der Abreinigungstank 8 gegenüber dem Druckfilter 4 bereitstellen soll. Liegt der Abreinigungsdruck gegenüber dem Filterdruck pF im vorbestimmten Bereich zwischen der oberen und der unteren Druckdifferenz, so bleibt der erste Differenzdruckregler 10 und der zweite Differenzdruckregler 12 geschlossen. Steigt der Filterdruck pF an, so dass die Druckdifferenz zwischen dem Filterdruck pF und dem Abreinigungsdruck pT unter der unteren Druckdifferenz liegt, so wird der erste Differenzdruckregler 10 geöffnet um den Abreinigungsdruck pT im Abreinigungstank 8 zu erhöhen. Sinkt der Filterdruck pF, so dass die Druckdifferenz zwischen dem Filterdruck und dem Abreinigungsdruck über der oberen Druckdifferenz liegt, so wird der zweite Differenzdruckregler 12 geöffnet, um den Abreinigungsdruck durch Ablassen der Druckluft über die Ablassleitung 7 zu verringern.

Die obere und die untere Druckdifferenz werden durch Federn 34, 36 in der Regeleinheit 14, 16 eingestellt. Die erste Feder 34 ist in der ersten negativen Druckkammer 20 der ersten Regeleinheit 14 angeordnet und übt einen Druck auf die Membran 22 der ersten negativen Druckkammer 20 aus. An der ersten Regeleinheit 10 kann die untere Druckdifferenz eingestellt werden. Liegt das Druckverhältnis zwischen der ersten positiven Druckkammer 18 und der ersten negativen Druckkammer 20 unter dem Schwellwert, öffnet der erste Differenzdruckregler 10. Infolgedessen wird der Abreinigungstank 8 von der Gasspeisung 6 gespeist bis die Druckdifferenz zwischen der oberen und der unteren Druckdifferenz liegt. Die zweite Feder 36 ist in der zweiten negativen Druckkammer 26 des zweiten Differenzdruckreglers 12 angeordnet und wirkt einen Druck auf die zweite Membran 28 aus. Liegt das Druckverhältnis zwischen der zweiten positiven Druckkammer 24 und der zweiten negativen Druckkammer 26 über der oberen Druckdifferenz, öffnet der zweite Differenzdruckregler 12. Infolgedessen wird die Druckluft im Abreinigungstank 8 über die Ablassleitung 7 in den Druckfilter 4 abgelassen. Der zweite Differenzdruckregler 12 bleibt solange geschlossen wie der Überdruck nicht über der oberen Druckdifferenz liegt.

Durch solch einen fluidführenden Regelkreis ist gewährleistet, dass der Abreinigungsdruck pT im Abreinigungstank 8 zu jeder Zeit in einem bestimmten Betrag über dem Filterdruck pF im Druckfilter 4 liegt, unabhängig davon ob der Filterdruck pF steigt oder sinkt. Es soll jedoch kurz erwähnt werden, dass die Filteranlage nicht zum Auslösen des eigentlichen Abreinigungsvorgangs dient. Zur Abreinigung wird ein Luftstrom aus dem Abreinigungstank 8 über eine oder mehrere Rohrleitung (nicht abgebildet) in die Blasrohre des Druckfilters 4 geleitet (nicht abgebildet). Der eigentliche Abreinigungsvorgang wird durch Ventile, bevorzugt Membranventile (nicht abgebildet) gesteuert, welche zwischen dem Abreinigungstank und dem Druckfilter angeordnet sind und durch Öffnen die Schlauchfilter abreinigen.

Die Reglung wird im Folgenden anhand 3 verschiedener Phasen mit jeweils einem unterschiedlichen Filterdruck pF erläutert. Bei diesem besonders bevorzugten Beispiel, werden die Filterschläuche bei einem Überdruck zwischen 4 und 5 bar optimal gereinigt. Der erste Differenzdruckregler 10 ist deshalb so eingestellt, dass er bei einer ersten Druckdifferenz kleiner als 4 bar öffnet. Der zweite Differenzdruckregler 12 ist so eingestellt, dass er ab einer Druckdifferenz von 5 bar öffnet.

In einer erste Phase liegt der Speisedruck bei pN = 20 bar, der Filterdruck liegt bei pF = 10 bar und der Abreinigungsdruck liegt bei pT = 14,5 bar. Durch die Fluidverbindung mit dem Abreinigungstank 8, beträgt der Druck in der positiven Wirkleitung 30, in der ersten positiven Druckkammer 18 und in der zweiten positiven Druckkammer 24 ebenfalls 14,5 bar. Durch die Fluidverbindung mit dem Druckfilter 4 , beträgt der Druck in der negativen Wirkleitung 32, in der ersten negativen Druckkammer 20 und der zweiten negativen Druckkammer 26 ebenfalls 10 bar. Somit liegt sowohl in der ersten Regeleinheit 14 und in der zweiten Regeleinheit 16 eine Druckdifferenz von 4,5 bar an. Die Druckdifferenz entspricht dem Überdruck des Abreinigungsdrucks gegenüber dem Filterdruck. Die Druckdifferenz von 4,5 bar liegt in dem Bereich in dem die Schlauchfilter optimal gereinigt werden. Somit bleibt sowohl der erste Differenzdruckregler 10 als auch der zweite Differenzdruckregler 12 geschlossen.

In einer zweiten Phase ist der Druck im Druckfilter auf pF = 12 bar gestiegen. Der Überdruck im Abreinigungstank 8 beträgt somit 2,5 bar und ist somit zu gering um eine effiziente Abreinigung der Filterschläuche zu ermöglichen. Deshalb öffnet der erste Differenzdruckregler 10 und der Abreinigungstank 8 wird mit Abreinigungsluft gefüllt um den Abreinigungsdruck im Abreinigungstank 8 zu erhöhen. Der erste Differenzdruckregler 10 bleibt solange geöffnet, bis die Druckdifferenz zwischen dem Abreinigungstank 8 und Druckfilter 4 wieder 4 bar beträgt. Der zweite Differenzdruckregler 12 bleibt aufgrund der Druckdifferenz von 2,5 bar geschlossen.

In einer dritten Phase ist der Druck im Druckfilter 4 auf pF = 8 bar gesunken. Dementsprechend beträgt der Überdruck 6,5 bar, wodurch der erste Differenzdruckregler 10 geschlossen bleibt und der zweite Differenzdruckregler 12 öffnet. Der zweite Differenzdruckregler 12 bleibt solange geöffnet, bis die Druckdifferenz zwischen dem Abreinigungstank 8 und dem Druckfilter 4 wieder 5 bar beträgt.

Die Filteranlage 2 ist somit selbstregelnd. Sobald sich der Filterdruck verändert, sodass eine vorgegebene Druckdifferenz zwischen Filterdruck und Abreinigungsdruck nicht mehr eingehalten wird, wird der Abreinigungsdruck so durch das Zusammenspiel der beiden Differenzdruckregler 10, 12 nachgeführt, dass der benötigte Überdruck gewährleistet wird. Der Abreinigungsdruck wird selbstverständlich auch nachgeführt, wenn sich der Druck im Abreinigungstank 8 ändert. Das kommt immer dann vor, wenn aus dem Abreinigungstank Druckluft für die Abreinigung entnommen wird (Armaturen und Leitungen für die Abreinigung sind hier nicht dargestellt). Durch diese Entnahme sinkt der Druck im Abreinigungstank 8, folglich sinkt auch die Druckdifferenz zwischen Abreinigungstank 8 und Druckfilter 4, folglich öffnet der Differenzdruckregler 10 bis die Druckdifferenz wieder 4 bar beträgt.

In den Wirkleitungen 30, 32 können jeweils zwei Durchflussmengenbegrenzer angeordnet sein, welche den maximalen Volumenstrom begrenzen, der durch die Wirkleitungen 30, 32 fließt. Die positiven Durchflussmengenbegrenzer 38, 39 sind in der positiven Wirkleitung 30 angeordnet und die negative Durchflussmengenbegrenzer 40, 41 sind in der negativen Wirkleitung 32 angeordnet. Durch Begrenzung des maximalen Volumenstroms in den Wirkleitungen 30, 32 können Oszillationen der Dififerenzdruckregler 10, 12 vermieden werden.

### Zeichenerklärung:

- 2: Filteranlage
- 4: Druckfilter
- 6: Druckluftspeisung
- 7: Ablassleitung
- 8: Abreinigungstank
- 9: Druckfilterleitung
- 10: Erster Differenzdruckregler
- 12: Zweiter Differenzdruckregler
- 14: Erste Regeleinheit
- 16: Zweite Regeleinheit
- 18: Erste positive Druckkammer
- 20: Erste negative Druckkammer
- 22: Erste flexible Membran
- 24: Zweite positive Druckkammer
- 26: Zweite negative Druckkammer
- 28: Zweite flexible Membran
- 30: Positive Wirkleitung
- 32: Negative Wirkleitung
- 34: Erste Feder
- 36: Zweite Feder
- 38, 39: Positiver Durchflussmengenmesser
- 40, 41: Negativer Durchflussmengenmesser

## Patentansprüche

1. Filteranlage umfassend:
- eine Gasspeisung, welche ein Abreinigungsmedium mit einem Speisedruck pN bereitstellt,
- einen Abreinigungstank in dem das Abreinigungsmedium mit einem Abreinigungsdruck pT gespeichert ist und durch die Gasspeisung gespeist wird, wobei pN > pT,
- einen Druckfilter mit einem Filterdruck pF, welcher mit dem Abreinigungsmedium aus dem Abreinigungstank den Druckfilter zyklisch oder differenzdruckabhängig abreinigt,
**dadurch gekennzeichnet, dass** die Filteranlage einen Regelkreis aufweist, umfassend:
- einen ersten Differenzdruckregler, der zwischen der Gasspeisung und dem Abreinigungstank angeordnet ist,
- eine erste Regeleinheit, welche den ersten Differenzdruckregler bei einer unteren Druckdifferenz betätigt,
- einen zweiten Differenzdruckregler, ist in einer Ablassleitung des Abreinigungstanks angeordnet,
- eine zweite Regeleinheit, welche den zweiten Differenzdruckregler betätigt, welche den zweiten Differenzdruckregler bei einer oberen Druckdifferenz betätigt,
- eine positive Wirkleitung, welche die erste Regeleinheit mit der zweiten Regeleinheit und dem Abreinigungstank fluidverbindet,
- eine negative Wirkleitung, welche die erste Regeleinheit mit der zweiten Regeleinheit und dem Druckfilter fluidverbindet,
wobei ein Überdruck des Abreinigungsdruck pT gegenüber dem Filterdruck pN an der ersten Regeleinheit und der zweiten Regeleinheit anliegt, wobei die erste Regeleinheit den ersten Differenzdruckregler betätigt, wenn der Überdruck unter der unteren Druckdifferenz liegt, wobei die zweite Regeleinheit den zweiten Differenzdruckregler betätigt, wenn der Überdruck über der oberen Druckdifferenz liegt.

2. Filteranlage nach Anspruch 1, wobei die erste Regeleinheit eine erste Feder umfasst mit der die erste vorbestimmte Druckdifferenz einstellbar ist und wobei die zweite Regeleinheit eine zweite Feder umfasst mit der die zweite vorbestimmte Druckdifferenz einstellbar ist.

3. Filteranlage nach einem der vorherigen Ansprüche, wobei der erste Differenzdruckregler mit der ersten Regeleinheit mechanische gekoppelt ist und/oder wobei der zweite Differenzdruckregler mit der zweiten Regeleinheit mechanisch gekoppelt ist.

4. Filteranlage nach einem der vorherigen Ansprüche, wobei der erste Differenzdruckregler mit der ersten Regeleinheit elektronisch gekoppelt ist und/oder wobei der zweite Differenzdruckregler mit der zweiten Regeleinheit elektronisch gekoppelt ist.

5. Filteranlage nach einem der vorherigen Ansprüche, wobei der erste Differenzdruckregler im Ruhezustand geöffnet ist und der zweite Differenzdruckregler im Ruhezustand geschlossen ist.

6. Filteranlage nach einem der vorherigen Ansprüche, wobei die Filteranlage in einem Sendegefäß angeordnet ist und eine Abreinigung der Filter sowohl beim Komprimieren als auch beim Entspannen des Abreinigungsmediums im Sendegefäß durchführbar ist.

7. Filteranlage nach einem der vorherigen Ansprüche, wobei der Regelkreis mindestens einen Durchflussmengenbegrenzter umfasst, welcher in der negativen und/oder positiven Wirkleitung angebracht sind.
